# EUROPÄISCHE PATENTSCHRIFT

(11) **EP 4 513 063 B1**
(45) Veröffentlichungstag und Bekanntmachung des Hinweises auf die Patenterteilung: **25.03.2026**
(21) Anmeldenummer: 24195642.4
(22) Anmeldetag: 21.08.2024
(51) Int. Cl.: F16H 61/04, F16H 61/684

(54) **VERFAHREN ZUM BETREIBEN EINER MOBILEN ARBEITSMASCHINE, RECHENEINHEIT UND MOBILE ARBEITSMASCHINE**
METHOD FOR OPERATING A MOBILE WORKING MACHINE, COMPUTING UNIT AND MOBILE WORKING MACHINE
PROCÉDÉ DE FONCTIONNEMENT D'UNE MACHINE DE TRAVAIL MOBILE, UNITÉ DE CALCUL ET MACHINE DE TRAVAIL MOBILE

(30) Priorität: 25.08.2023 DE 102023208168
(43) Veröffentlichungstag der Anmeldung: 26.02.2025
(73) Patentinhaber: Robert Bosch GmbH, 70442 Stuttgart (DE)
(72) Erfinder: Voelk, Peter, 89073 Ulm (DE)

(56) Entgegenhaltungen:
- EP-B1- 3 889 467
- DE-A1- 102019 215 215
- DE-A1- 102020 210 196
- DE-A1- 102022 210 173
- US-A1- 2003 070 859
- US-A1- 2005 282 682

## Beschreibung

Die vorliegende Erfindung betrifft ein Verfahren zum Betreiben einer mobilen Arbeitsmaschine, wobei die mobile Arbeitsmaschine einen Fahrantrieb mit einem Getriebe mit wenigstens zwei verschiedenen, wählbaren Übersetzungsstufen, und ein Bedienelement, z.B. ein Fahrpedal, aufweist, eine Recheneinheit und ein Computerprogramm zu dessen Durchführung, sowie eine solche mobile Arbeitsmaschine.

### Hintergrund der Erfindung

Mobile Arbeitsmaschinen wie z.B. Traktoren oder Baumaschinen, weisen typischerweise einen Fahrantrieb mit Getriebe und ein Bedienelement, z.B. ein Fahrpedal, auf. Eine Zugkraftkennlinie kann dabei verwendet werden, um eine Stellung des Bedienelements auf eine Zugkraft des Fahrantriebs abzubilden, um die mobile Arbeitsmaschine zu bewegen.

### Offenbarung der Erfindung

Erfindungsgemäß werden ein Verfahren zum Betreiben einer mobilen Arbeitsmaschine, eine Recheneinheit und ein Computerprogramm zu dessen Durchführung, sowie eine mobile Arbeitsmaschine mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit mobilen Arbeitsmaschinen wie z.B. Traktoren oder Baumaschinen. Eine solche mobile Arbeitsmaschine weist typischerweise einen Fahrantrieb mit einem Getriebe und ein Bedienelement, z.B. ein Fahrpedal, einen Joystick oder dergleichen auf. Als Fahrantrieb kommt z.B. ein hydrostatischer Fahrantrieb oder ein elektrischer Fahrantrieb in Betracht. Das Getriebe kann hierbei ein Stufengetriebe sein oder umfassen. Allgemein kann das Getriebe wenigstens zwei verschiedene, wählbare Übersetzungsstufen (auch als Gänge bezeichnet) aufweisen. In der Praxis sind auch mehr als zwei Übersetzungsstufen zweckmäßig.

Die zwei (oder auch mehr) Übersetzungsstufen können z.B. durch die Verwendung von zwei (oder auch mehr) Hydromotoren (im Rahmen eines hydrostatischen Antriebs) ausgebildet oder dargestellt werden. Ein Beispiel für einen solchen hydrostatischen Antrieb mit zwei Übersetzungsstufen ist in der DE 10 2020 210 196 A1 beschrieben und kann z.B. auch vorliegend verwendet werden. Die zwei (oder auch mehr) Übersetzungsstufen können aber z.B. auch durch die Verwendung von zwei (oder auch mehr) mechanische Getriebestufen (z.B. ebenfalls im Rahmen eines hydrostatischen Antriebs) ausgebildet oder dargestellt werden; dies ist auch unter dem Begriff "Shift on Fly" bekannt. Ein Beispiel hierfür ist in der EP 3 889 467 B1 beschrieben und kann z.B. auch vorliegend verwendet werden.

Die Getriebe für solche Fahrantriebe werden üblicherweise eingesetzt, um für verschiedene Fahrsituationen entsprechende Drehmomente zur Verfügung stellen zu können (z.B. Gang bzw. Übersetzungsstufe mit hoher Übersetzung für hohe Drehmomente bei niedrigen Geschwindigkeiten) und gleichermaßen Anforderungen an den geforderten Geschwindigkeitsbereich einhalten zu können (z.B. Gang bzw. Übersetzungsstufe mit niedriger Übersetzung für Maximalgeschwindigkeit).

Das vom Fahrantrieb zu stellende Drehmoment kann dabei durch Ansteuerung vorgegeben (drehmomentenbasierte Ansteuerung) und entsprechend einem Antriebskonzept umgesetzt werden. Beim Schalten (Wechseln der Übersetzungsstufe) kann ein solches Stufengetriebe praktisch momentenfrei gestellt werden - hydrostatisch z.B. über das Zurückschwenken des Motors oder bei elektrischen Antrieben über das Zurücknehmen des Moments am Motor oder dessen Inverter - ,um nach dem Einlegen des neuen Gangs wieder ein Drehmoment zu stellen.

Das zu stellende Drehmoment kann z.B. in der Fahrantriebssoftware hinterlegt werden, z.B. durch Tabellen oder Funktionen. Dabei kann das zu stellende Drehmoment von mehreren Größen abhängig sein, z.B. der Stellung des Bedienelements (also z.B. der Fahrpedalstellung), der Geschwindigkeit, der Motordrehzahl, vor allem aber auch vom momentan eingelegten Gang, d.h. von der aktuell gewählten Übersetzungsstufe. Allgemein soll dabei nachfolgend von Zugkraftfunktionen gesprochen werden, die eine Stellung des Bedienelements auf eine Zugkraft, d.h. ein Drehmoment, das vom Fahrantrieb zu stellen ist, abbilden. Dies soll nicht ausschließen, dass auch andere Größen in einer Zugkraftfunktion berücksichtigt sein können. Häufig wird auch der Begriff Zugkraftkennlinie verwendet.

Insbesondere kann eine Zugkraftfunktion auch von der Übersetzungsstufe abhängig sein, d.h. es kann jeder Übersetzungsstufe eine eigene Zugkraftfunktion zugeordnet sein. Durch die Abhängigkeit vom Gang bzw. der Übersetzungsstufe und dessen sprunghafter Änderung beim Schalten, ergibt sich auch ein harter Sprung in den hinterlegten Daten oder Tabellen (Zugkraftfunktion) für das zu stellende Drehmoment. Diese sprunghafte Änderung führt allerdings zu einer Beschleunigung oder Verzögerung nach dem Schaltvorgang - was oft unerwünscht ist. Auch eine (einfache) Rampe oder verzögerte Aufschaltung auf das neue Drehmoment würde trotzdem eine Geschwindigkeitsänderung hervorrufen.

Um dies zu umgehen, ist es beispielsweise möglich, nur eine Zugkraftfunktion für beide (oder mehrere oder alle) Übersetzungsstufen zu verwenden, ggf. umgerechnet um den Übersetzungsfaktor zwischen den Übersetzungsstufen. Allerdings würde dies dazu führen, dass entweder die Auflösung des Bedienelements gering wäre und die Kontrollierbarkeit der Übersetzungsstufen nicht vergleichbar gut wäre oder die maximale Geschwindigkeit nicht erreichbar wäre.

Vor diesem Hintergrund wird die Verwendung einer virtuellen Bedienelementstellung vorgeschlagen, die zumindest zeitweise anstelle einer realen Bedienelementstellung verwendet wird. Dabei ist jeder der zwei verschiedenen, wählbaren Übersetzungsstufen jeweils eine Zugkraftfunktion zugeordnet, die eine Bedienelementstellung des Bedienelements auf ein von dem Fahrantrieb zu stellendes Drehmoment und/oder eine Geschwindigkeit der mobilen Arbeitsmaschine abbildet.

Wenn nun ein Übersetzungsstufenwechsel von einer vorherigen Übersetzungsstufe mit einer vorherigen Zugkraftfunktion zur einer aktuellen (d.h. späteren) Übersetzungsstufe mit einer aktuellen Zugkraftfunktion erfolgt, wird eine vor dem Übersetzungsstufenwechsel vorliegende, reale Bedienelementstellung bereitgestellt oder bestimmt. Zudem wird eine vor dem Wechsel vorliegende Geschwindigkeit der mobilen Arbeitsmaschine, bereitgestellt oder bestimmt, zusätzlich oder alternativ zur Geschwindigkeit wird ein basierend auf der vorherigen Bedienelementstellung und der vorherigen Zugkraftfunktion vor dem Wechsel zu stellendes Drehmoment bereitgestellt oder bestimmt.

Es wird dann, basierend auf der aktuellen Zugkraftfunktion, ein Äquivalenzwert der Bedienelementstellung bestimmt, und zwar derart, dass das basierend auf der virtuellen Bedienelementstellung und der aktuellen Zugkraftfunktion sich ergebende, zu stellende Drehmoment zumindest innerhalb vorgegebener Grenzen dem vor dem Wechsel vorliegenden, zu stellenden Drehmoment entspricht, und/oder derart, dass die basierend auf dem Äquivalenzwert der Bedienelementstellung und der aktuellen Zugkraftfunktion sich ergebende, Geschwindigkeit zumindest innerhalb vorgegebener Grenzen der vor dem Wechsel vorliegenden, Geschwindigkeit entspricht. Der Äquivalenzwert kann dann bereitgestellt werden. Insbesondere kann der Äquivalenzwert so bestimmt werden, dass Drehmoment und/oder Geschwindigkeit vor und nach dem Übersetzungsstufenwechsel gleich sind. Dies lässt sich anhand der Zugkraftfunktion in der Regel sehr einfach bestimmen. Ein anschauliches Bespiel hierzu wird im Rahmen der Figurenbeschreibung näher erläutert.

In einer Ausführungsform wird dann, zumindest bis zum Erreichen eines oder eines von mehreren Abbruchkriterien, basierend auf der realen Bedienelementstellung und unter Berücksichtigung des Äquivalenzwertes der Bedienelementstellung, eine virtuellen Bedienelementstellung bestimmt. Der Fahrantrieb wird dann gemäß der der aktuell gewählten Übersetzungsstufe zugeordneten Zugkraftfunktion und basierend auf der virtuellen Bedienelementstellung angesteuert.

Auf diese Weise können also für verschiedene Übersetzungsstufen auch verschiedene Zugkraftfunktionen bzw. Zugkraftkennlinien verwendet werden, die z.B. je nach Bedarf für die jeweilige Übersetzungsstufe optimal ausgelegt werden können. Durch die Verwendung der virtuellen Bedienelementstellung kommt es beim Wechsel der Übersetzungsstufe nicht zu einer Geschwindigkeitsänderung, wenn der Benutzer die (reale) Bedienelementstellung nicht ändert.

In einer Ausführungsform umfasst das Bestimmen der virtuellen Bedienelementstellung, basierend auf der realen Bedienelementstellung und unter Berücksichtigung des Äquivalenzwertes der Bedienelementstellung, dass eine Überführungsfunktion bestimmt oder bereitgestellt wird, die die reale Bedienelementstellung auf die virtuelle Bedienelementstellung abbildet und dabei den Äquivalenzwert der Bedienelementstellung umfasst. Die virtuelle Bedienelementstellung wird dann basierend auf der realen Bedienelementstellung und der Überführungsfunktion bestimmt. Auf diese Weise können auch Änderungen der realen Bedienelementstellung nach dem Übersetzungsstufenwechsel auf eine virtuelle Bedienelementstellung bzw. deren Änderung abgebildet werden.

In einer Ausführungsform wird die Überführungsfunktion derart bestimmt, dass sich deren Wert der virtuellen Bedienelementstellungen, ausgehend vom Äquivalenzwert, mit zunehmendem und/oder abnehmendem Wert der realen Bedienelementstellung an entsprechende Werte einer Identitätsabbildung annähern; die Identitätsabbildung bildet dabei die reale Bedienelementstellung direkt auf die virtuelle Bedienelementstellung ab. Außerdem kann die Überführungsfunktion derart bestimmt werden, dass deren Wertebereich der realen Bedienelementstellungen, ausgehend vom Äquivalenzwert, einen maximalen Wert für zunehmende und/oder einen minimalen Wert für abnehmende Wert der realen Bedienelementstellung umfassen. Damit kann eine größtmögliche Auflösung des Bedienelements erreicht werden.

In einer Ausführungsform ist zudem ein bestimmtes Vorgehen jeweils bei einem Wechsel einer Betätigungsrichtung des Bedienelements vorgesehen. Unter einem Wechsel einer Betätigungsrichtung des Bedienelements ist dabei insbesondere zu verstehen, dass das Bedienelements weniger oder mehr ausgelenkt wird, also der Benutzer z.B. etwas abbremsen oder beschleunigen will. Wenn das Bedienelement zwischen 0% und 100% ausgelenkt werden kann, und es zunächst beim Übersetzungsstufenwechsel z.B. um 50% ausgelenkt ist, dann auf z.B. 75% erhöht und dann wieder auf z.B. 70% zurückgenommen wird, liegt bei 75% ein Wechsel der Betätigungsrichtung des Bedienelements vor.

In einem solchen Fall wird ein jeweiliger neuen Äquivalenzwert der Bedienelementstellung bestimmt, der der virtuellen Bedienelementstellung beim Wechsel der Betätigungsrichtung entspricht. Wenn der initiale Äquivalenzwert beim Übersetzungsstufenwechsel basierend auf 50% für die reale Bedienelementstellung lag, liegt der neue Äquivalenzwert im obigen Beispiel bei 75% für die reale Bedienelementstellung. Es wird dann auch eine jeweilige neue Überführungsfunktion bestimmt oder bereitgestellt, die die reale Bedienelementstellung auf die virtuelle Bedienelementstellung abbildet und den jeweiligen neuen Äquivalenzwert der Bedienelementstellung umfasst. Die virtuelle Bedienelementstellung wird dann basierend auf der realen Bedienelementstellung und der jeweiligen neuen Überführungsfunktion bestimmt. Auf diese Weise ist es möglich, die virtuelle Bedienelementstellung immer näher an die reale Bedienelementstellung anzunähern. Dies gilt insbesondere dann, wenn auch die neuen Überführungsfunktion wie die initiale Überführungsfunktion bestimmt werden, d.h., dass diese sich ebenfalls an die Identitätsabbildung annähern.

In einer Ausführungsform wird, nach Erreichen des einen oder des einen von den mehreren Abbruchkriterien, der Fahrantrieb gemäß der der aktuell gewählten Übersetzungsstufe zugeordneten Zugkraftkennlinie und basierend auf der realen Bedienelementstellung angesteuert. Auf diese Weise wird also der reguläre Betrieb wieder verwendet. Hierzu sei angemerkt, dass das Ansteuern basierend auf der Bedienelementstellung gleichbedeutend damit ist, den Fahrantrieb basierend auf der virtuellen Bedienelementstellung anzusteuern, wobei die reale Bedienelementstellung als die virtuelle Bedienelementstellung verwendet wird.

Als Abbruchkriterien können verschiedene Kriterien in Betracht gezogen werden. So kann z.B. als Abbruchkriterium verwendet werden, dass die reale Bedienelementstellung einen minimalen oder maximalen Wert (also 0% oder 100%) erreicht, in diesem Fall kann ohne erkennbaren Übergang zurück gewechselt werden. Ebenso kann z.B. als Abbruchkriterium verwendet werden, dass die reale Bedienelementstellung einen Wert erreicht, der um höchstens einen vorgegebenen Wert, z.B. 5% des gesamten Auslenkungsbereichs des Bedienelements (dann also z.B., wenn 5% oder 95% Auslenkung erreicht wird), vom minimalen oder maximalen Wert abweicht. Auf diese Weise kann in vielen Fällen früher zurück in den regulären Betrieb gewechselt werden.

Ebenso kann z.B. als Abbruchkriterium verwendet werden, dass die gemäß aktuell verwendeter Überführungsfunktion bestimmte virtuelle Bedienelementstellung einen Wert erreicht, der der realen Bedienelementstellung entspricht. Mit anderen Worten ist dies dann der Fall, wenn die Überführungsfunktion die Identitätsabbildung schneidet oder ab einem bestimmten Punkt damit gleichläuft, und dieser Punkt erreicht wird. Ebenso kann z.B. als Abbruchkriterium verwendet werden, dass die gemäß aktuell verwendeter Überführungsfunktion bestimmte virtuelle Bedienelementstellung einen Wert erreicht, der um höchstens einen vorgegebenen Wert von der realen Bedienelementstellung abweicht. Auf diese Weise kann in vielen Fällen früher zurück in den regulären Betrieb gewechselt werden. Ebenso kann z.B. als Abbruchkriterium verwendet werden, dass eine Steigung der aktuell verwendeten Überführungsfunktion einem Wert entspricht oder einen Wert erreicht, der um höchstens einen vorgegebenen Wert von einer Steigung der Identitätsabbildung abweicht. Auf diese Weise kann in vielen Fällen ebenfalls früher zurück in den regulären Betrieb gewechselt werden.

Zusammenfassend wird im Rahmen der vorliegenden Erfindung also ein Algorithmus vorgeschlagen, der das Drehmoment, das vor einem Gang- oder Übersetzungsstufenwechsel angefordert wurde, in der Zugkraftfunktion des neu einzulegenden Gangs bestimmt. Um das geforderte Drehmoment im neuen Gang zu stellen, wird zu der Zugkraftfunktion des neuen Gangs eine virtuelle Bedienelementstellung berechnet. Des Weiteren kann der Algorithmus einen weiteren Teil umfassen, der die virtuelle Bedienelementstellung z.B. kontinuierlich an die vom Fahrer real vorgegebene Bedienelementstellung angleicht, bis die reale Bedienelementstellung wieder maßgeblich für die Zugkraftfunktion eingesetzt wird.

Dabei kann dem Fahrer in allen Situationen, d.h. während des ganzen Prozesses, eine volle Bedienelementauflösung zur Verfügung gestellt werden, d.h. mit voller Auslenkung des Bedienelement kann die maximale Geschwindigkeit für den eingelegten Gang erreicht werden, und mit Auslenkung Null kann auf Geschwindigkeit Null verzögert werden, ohne dass eine sprunghafte Änderung der Zugkraft bemerkbar wäre. Das Stellen der neuen Zugkraft bzw. des neuen Drehmoments kann realisiert werden, indem das initiale Verhältnis der Bedienelementstellungen real vs. virtuell bestimmt wird. Sobald eine Änderung der Bedienelementstellung nach dem Schaltvorgang registriert wird, wird die (restliche) Auflösung der virtuellen Bedienelementstellung über eine Funktion, auf die verbleibende Auflösung der realen Bedienelementstellung skaliert. Bei einem Wechsel der Bewegungsrichtung des Bedienelements (z.B. nach weiterem Drücken wird das Bedienelement wieder losgelassen), kann der neue Punkt, der durch das Verhältnis reale zu virtuelle Bedienelementstellung gegeben ist, als neuer Startwert verwendet werden, um die Skalierung, reale zu virtuelle Bedienelementstellung, neu zu berechnen. Dies kann so lange fortgeführt werden, bis bestimmte Bedingungen (Abbruchkriterien) dazu führen, dass die reale Bedienelementstellung wieder als regulärer Eingang für die Zugkraftfunktion verwendet werden kann.

Eine erfindungsgemäße Recheneinheit, z.B. ein Steuergerät eines Fahrantriebs einer mobilen Arbeitsmaschine, ist, insbesondere programmtechnisch, dazu eingerichtet, ein erfindungsgemäßes Verfahren durchzuführen.

Die Erfindung betrifft auch eine mobile Arbeitsmaschine, die einen Fahrantrieb mit einem Getriebe mit wenigstens zwei verschiedenen, wählbaren Übersetzungsstufen, und ein Bedienelement aufweist, wobei die mobile Arbeitsmaschine eingerichtet ist, bei einer Betätigung des Bedienelements den Fahrantrieb mit einer aktuell gewählten Übersetzungsstufe zu betreiben, wobei die mobile Arbeitsmaschine weiterhin eine erfindungsgemäße Recheneinheit aufweist.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen verwendbar sind, solange sie nicht im Widerspruch zu den Ansprüchen stehen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine mobile Arbeitsmaschine zur Erläuterung der Erfindung.
- Figur 2: zeigt schematisch einen Ablauf eines erfindungsgemäßen Verfahrens in einer Ausführungsform.
- Figur 3: zeigt Diagramme zur Erläuterung der Erfindung.

### Detaillierte Beschreibung der Zeichnung

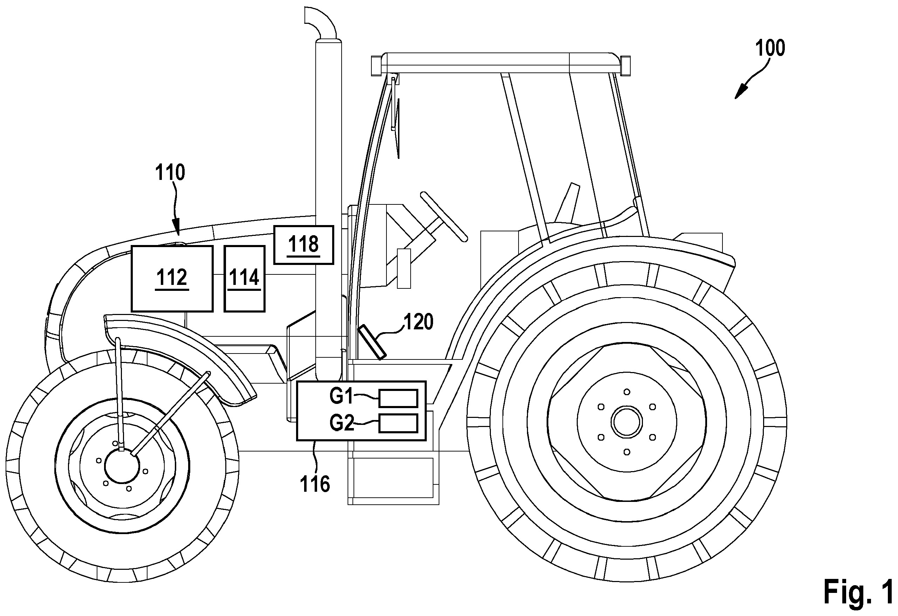

In Figur 1 ist schematisch ein mobiles Arbeitsgerät 100 zur Erläuterung der Erfindung gezeigt. Bei dem mobilem Arbeitsgerät 100 handelt es sich beispielhaft um einen Traktor. Der Traktor 100 weist einen Fahrantrieb 110 auf, der beispielhaft eine elektrische Maschine bzw. einem Elektromotor 112 und einen Umrichter 114, ein Getriebe 116 sowie eine als Steuergerät ausgebildete Recheneinheit 118 zum Ansteuern des Fahrantrieb 110 aufweist. Der Traktor 100 weist zudem ein beispielhaft als Fahrpedal ausgebildetes Bedienelement 120 auf.

Das Getriebe 116 weist beispielhaft zwei verschiedene, wählbaren Übersetzungsstufen G1, G2 auf. Dabei ist der Traktor 100 eingerichtet, bei einer Betätigung des Fahrpedal 120 den Fahrantrieb 110 mit einer aktuell gewählten Übersetzungsstufe G1, G2 zu betreiben bzw. anzusteuern, sodass der Traktor 100 fährt. Dabei kann der Fahrantrieb 110 insbesondere mittels des Steuergeräts 118 angesteuert werden, das vom Fahrpedal 120 ein Signal zu einer aktuellen, realen Bedienelementstellung erhält.

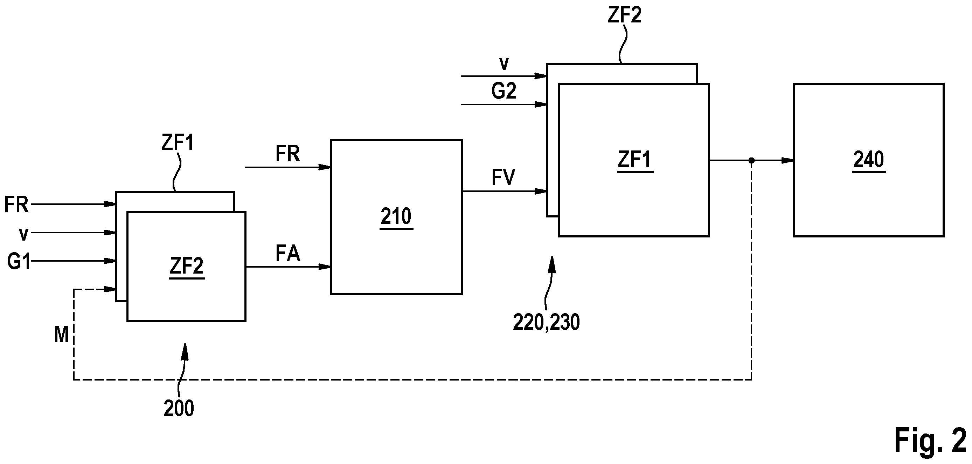

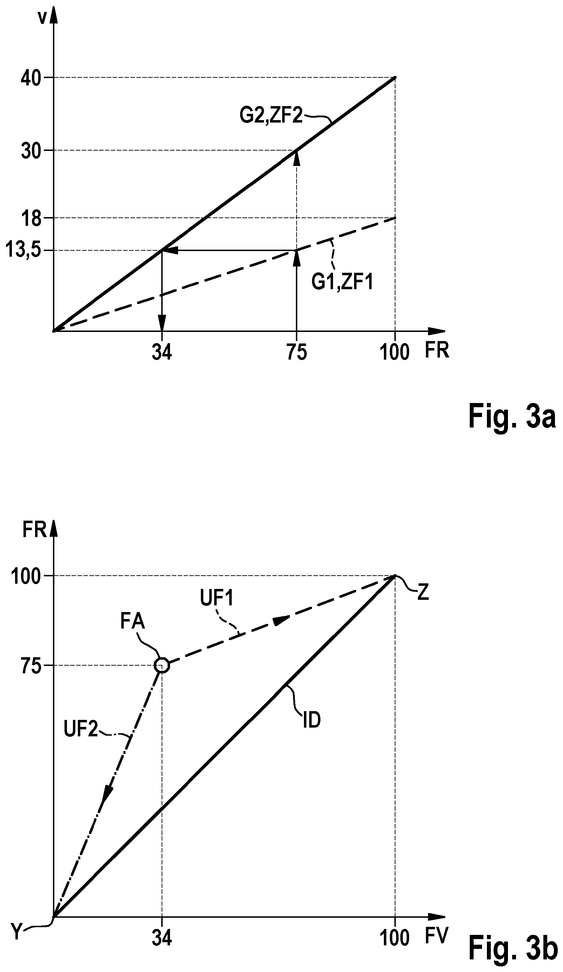

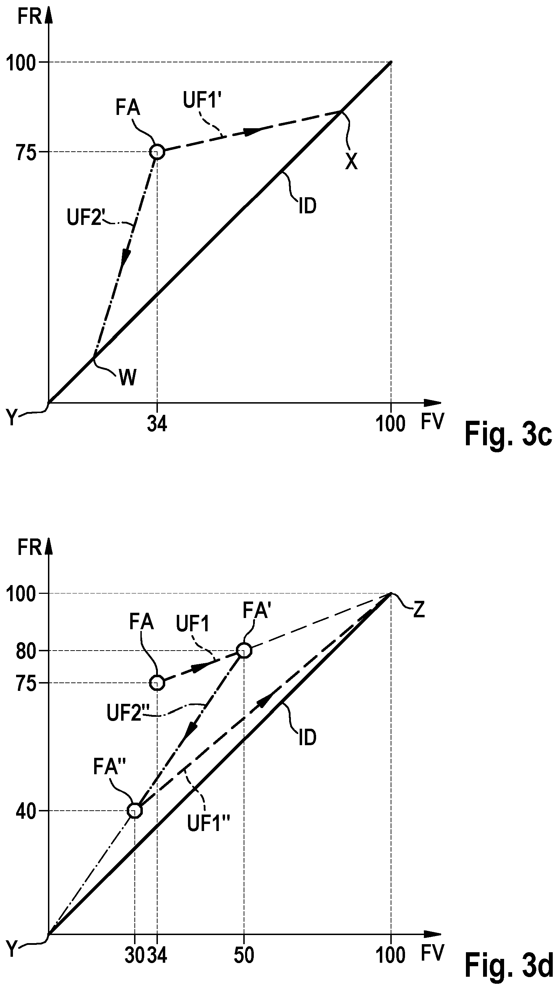

In Figur 2 ist schematisch ein Ablauf eines erfindungsgemäßen Verfahrens in einer Ausführungsform anhand eines Ablaufdiagramms dargestellt. Nachfolgend soll der Ablauf beispielhaft anhand von Figur 2 sowie unter Verweis auf die Diagramme der Figur 3 näher erläutert werden.

Bei z.B. momentenbasierten Fahrantrieben können Zugkraftkennlinien in der Fahrantriebssoftware, z.B. durch Tabellen oder Funktionen, hinterlegt sein, diese Zugkraftkennlinien können von mehreren Größen abhängig sein, z.B. der Bedienelement bzw. Fahrpedalstellung, Geschwindigkeit, und dergleichen, insbesondere vom momentan eingelegten Gang bzw. der aktuelle gewählten Übersetzungsstufe. Nachfolgend soll, wie vorstehend schon, allgemein von Zugkraftfunktionen gesprochen werden. Beispielhaft sollen hier Zugkraftfunktionen für ein Getriebe mit zwei Gängen (Übersetzungsstufen) G1, G2 herangezogen werden, die von der Geschwindigkeit und der Fahrpedalstellung abhängig sind. Das zu stellende Drehmoment (Soll-Moment) kann z.B. über eine nicht näher definierte Fahrantriebssoftware aufbereitet und entsprechend der Fahrantriebsarchitektur am Fahrantrieb umgesetzt werden. Dies kann beispielsweise das Anfordern eines Moments am Inverter eines elektrischen Fahrantriebs sein, oder das Stellen von Strömen an Ventilen elektrisch angesteuerter hydrostatischer Einheiten.

Wenn nun beim Betrieb bzw. Fahren der mobilen Arbeitsmaschine ein Übersetzungsstufenwechsel von einer vorherigen Übersetzungsstufe mit einer vorherigen Zugkraftfunktion zu einer aktuellen Übersetzungsstufe mit einer aktuellen Zugkraftfunktion erfolgt, wird eine virtuelle Bedienelement- bzw. Fahrpedalstellung bestimmt. Die zwei Übersetzungsstufen bzw. Gänge sollen nachfolgend wieder mit G1, G2 bezeichnet sein, die zugehörigen Zugkraftfunktionen mit ZF1, ZF2. Eine reale Bedienelement- bzw. Fahrpedalstellung soll mit FR bezeichnet sein, die virtuelle Bedienelement- bzw. Fahrpedalstellung mit FV, die Geschwindigkeit mit v und das zu stellende Drehmoment mit M.

Beispielhaft soll vom Gang G1 in den Gang G2 gewechselt werden. Im Falle eines Übersetzungsstufenwechsels werden also, Schritt 200, eine vor dem Wechsel vorliegenden realen Bedienelementstellung FR, eine vor dem Wechsel vorliegenden Geschwindigkeit v der mobilen Arbeitsmaschine, und ein basierend auf der vorherigen Bedienelementstellung FR und der vorherigen Zugkraftfunktion ZF1 vor dem Wechsel zu stellendes Drehmoment M bestimmt oder ermittelt.

Der Fahrantrieb bildet über die beiden Gänge G1, G2 in Verbindung mit den zugehörigen Zugkraftfunktionen ZF1, ZF2 unterschiedliche Geschwindigkeitsbereiche ab. Dies ist in Figur 3 im Diagramm (a) gezeigt, wozu eine Geschwindigkeit v in km/h über eine reale Fahrpedalstellung FR in % aufgetragen ist. Idealisiert soll hierbei angenommen werden, dass die Zugkraftfunktionen so ausgelegt sind, dass der Geschwindigkeitsbereich linear über die Fahrpedalstellung abgebildet wird. Hier soll über Gang G1 bzw. Zugkraftfunktion ZF1 der Geschwindigkeitsbereich 0-18 km/h und über den Gang G2 bzw. Zugkraftfunktion ZF2 der Geschwindigkeitsbereich 0-40 km/h abbildbar sein. Diese Bereiche können von verschiedenen Faktoren abhängen und können hierbei Teil der Fahrzeug-/Systemauslegung sein, auf die hierbei nicht weiter eingegangen werden soll. Es versteht sich, dass in Praxis auch eine andere als eine lineare Abbildung verwendet werden kann.

Wird z.B. während einer Konstantfahrt der Gang gewechselt, so soll die Geschwindigkeit nach dem Schaltvorgang gleich der Geschwindigkeit vor dem Schaltvorgang sein. Bleibt die reale Fahrpedalstellung FR während dieses Schaltvorgangs konstant, so ergibt sich beim Einsatz zweier verschiedener Zugkraftfunktionen ein Sprung im angeforderten Moment. Dies führt grundsätzlich dazu, dass das mobile Arbeitsgerät nach dem Hochschalten beschleunigt bzw. nach dem Herunterschalten verzögert, und sich eine neue Geschwindigkeit einstellt.

Wenn in dem Diagramm (a) in Figur 3 z.B. ein Wert von 75% für die reale Fahrpedalstellung FR vorliegt, entspricht dies im Gang G1 (Zugkraftfunktion ZF1) einer Wert von 13,5 km/h für die Geschwindigkeit v; im Gang G2 (Zugkraftfunktion ZF2) hingegen entspräche dies einem Wert von 30 km/h für die Geschwindigkeit v. Beim Wechsel vom Gang G1 in den Gang G2 würde sich also die Geschwindigkeit bei konstanter Fahrpedalstellung (75%) und ohne weitere Funktionen von etwa 13,5 km/h auf 30 km/h erhöhen.

Um die Geschwindigkeit nach dem Schaltvorgang beizubehalten, müsste die reale Fahrpedalstellung von dem Wert 75% auf etwa 34% zurückgenommen werden, wie ebenfalls in dem Diagramm (a) in Figur 3 zu sehen.

Hierzu wird nun, in Schritt 210, basierend auf der aktuellen Zugkraftfunktion ZF2, ein Äquivalenzwert FA der Bedienelement- bzw. Fahrpedalstellung bestimmt, und zwar derart, dass das basierend auf dem Äquivalenzwert FA und der aktuellen Zugkraftfunktion ZF2 sich ergebende, zu stellende Drehmoment zumindest innerhalb vorgegebener Grenzen dem vor dem Wechsel vorliegenden, zu stellenden Drehmoment M entspricht. Ebenso kann dies derart erfolgen, dass die basierend auf dem Äquivalenzwert FA und der aktuellen Zugkraftfunktion ZF2 sich ergebende, Geschwindigkeit zumindest innerhalb vorgegebener Grenzen der vor dem Wechsel vorliegenden, Geschwindigkeit v entspricht.

Dies ist ebenfalls in dem Diagramm (a) in Figur 3 ebenfalls veranschaulicht. Wie erwähnt, entspricht dem Wert von 75% für die reale Fahrpedalstellung FR im Gang G1 (Zugkraftfunktion ZF1) einem Wert von 13,5 km/h für die Geschwindigkeit v. Der Wert von 13,5 km/h für die Geschwindigkeit v wiederum entspricht dem Wert von ca. 34% für die reale Fahrpedalstellung FR im Gang G2 (Zugkraftfunktion ZF2). Die Fahrpedalstellung ist hier also ein freier Parameter, während die Geschwindigkeit vorgegeben ist. Die so bestimmte oder berechnete neue Fahrpedalstellung bzw. der betreffende Wert wird nun als der Äquivalenzwert FA ("äquivalentes Fahrpedal", vgl. Figur 2) verwendet.

In Schritt 220 wird dann, basierend auf der realen Fahrpedalstellung FR und unter Berücksichtigung des Äquivalenzwertes FA, eine virtuelle Fahrpedalstellung FV bestimmt. Basierend auf dieser virtuelle Fahrpedalstellung FV wird dann, Schritt 230, der Fahrantriebs gemäß der der aktuell gewählten Übersetzungsstufe G2 zugeordneten Zugkraftfunktion ZF2 und basierend auf der virtuellen Fahrpedalstellung FV angesteuert. Dies kann das Bestimmen eines zu stellenden Drehmoments (das zunächst dem von vorher entsprechen kann) umfassen, sowie, Schritt 240, weitere Umsetzungsvorgänge in der Fahrantriebssoftware.

Lässt sich, durch die unabhängige Auslegung der Gänge, die Zugkraft aus dem vorherigen Gang (vorherige Übersetzungsstufe) nicht im Kennfeld bzw. der Zugkraftfunktion des neueinzulegenden Gangs (aktuelle Übersetzungsstufe) finden, so kann ein dem vorherigen, zustellenden Drehmoment (Zugkraft) nächstliegende Wert verwendet werden. Des Weiteren kann der Fall eintreten, dass die Zugkraftfunktionen bei einer bestimmten Geschwindigkeit nicht monoton steigend sind. Das heißt für ein bestimmtes zu stellendes Drehmoment wären im neuen Gang bei gegebener Geschwindigkeit zwei virtuelle Fahrpedalstellungen (oder ggf. Äquivalenzwerte) möglich. In diesem Fall kann als virtuelle Fahrpedalstellung (oder ggf. Äquivalenzwert) diejenige ausgewählt werden, die der realen Fahrpedalstellung am nächsten liegt.

Das Stellen der neuen bzw. alten Zugkraft (Drehmoment) mittels der virtuellen Fahrpedalstellung ist dabei insbesondere nur der erste Schritt. Ziel ist es insbesondere auch, auch nach dem Schaltvorgang dem Fahrer wieder eine volle Fahrpedalauflösung zu ermöglichen und die virtuelle Fahrpedalstellung möglichst stetig in die reale Fahrpedalstellung zu überführen.

Zunächst kann angenommen werden, dass kürzlich kein Schaltvorgang (Übersetzungsstufenwechsel) ausgelöst worden ist. Dies heißt, dass die reale Fahrpedalstellung FR direkt auf die virtuelle Fahrpedalstellung VF abgebildet würde. In dem Diagramm (b) in Figur 3 ist hierzu die reale Fahrpedalstellung FR über der virtuellen Fahrpedalstellung FV aufgetragen. Mit ID ist eine Identitätsabbildung gezeigt, die die reale Fahrpedalstellung FR direkt auf die virtuelle Fahrpedalstellung FV abbildet; es handelt sich hier also insbesondere um eine gerade Linie im Diagramm, die durch den Ursprung verläuft.

Wird nun ein Schaltvorgang getriggert, d.h., erfolgt ein Übersetzungsstufenwechsel, so wird nach dem Schalten nicht mehr die reale Fahrpedalstellung FR verwendet (oder für die virtuelle Fahrpedalstellung FV verwendet oder weitergeleitet), sondern, zunächst der Äquivalenzwert FA. Der Äquivalenzwert FA aus Figur 2 und wie er sich durch die Veranschaulichung gemäß Diagramm (a) in Figur 3 (Pfeile von Wert 75% für FR nach Wert 34% für FR) ergibt, ist im Diagramm (b) in Figur 3 gezeigt. Bei diesem beispielhaften Hochschaltvorgang entspricht der Wert von 75% für die reale Fahrpedalstellung in Gang G1 einem Äquivalenzwert FA von 34% im Gang G2. Daher wird nun zunächst als virtuelle Fahrpedalstellung FV ein Wert von 34% verwendet.

Im weiteren Betrieb kann sich die reale Fahrpedalstellung aber natürlich auch ändern; eine solche Änderung ist dann ebenfalls in der virtuellen Fahrpedalstellung zu übernehmen. Hierzu kann eine Überführungsfunktion bestimmt werden, die die reale Fahrpedalstellung FR auf die virtuelle Fahrpedalstellung FV abbildet und den Äquivalenzwert FA umfasst. Die virtuelle Fahrpedalstellung wird dann basierend auf der realen Fahrpedalstellung und der Überführungsfunktion bestimmt

In dem im Diagramm (b) in Figur 3 sind mit UF1 und UF2 beispielhaft zwei Abschnitte einer solchen Überführungsfunktion gezeigt, wobei UF1 für zunehmende Werte der virtuelle Fahrpedalstellung gilt und UF2 für abnehmende Werte der virtuellen Fahrpedalstellung. Insbesondere können also, um eine volle Fahrpedalauflösung zu erhalten, die Wertebereiche der realen Fahrpedalstellungen - hier 0%-75% und 75%-100% - auf Wertebereiche der virtuellen Fahrpedalstellungen - hier 0%-34% und 34%-100% - auf skaliert oder umgerechnet. Diese Skalierung kann durch eine vorgegebene, parametrierbare Kurve oder Funktion dargestellt werden, soll allerdings nachfolgend zu Zwecken der einfacheren Erläuterung als linear angenommen werden.

Diese lineare Skalierung lässt sich z.B. darstellen, indem man den Äquivalenzwert FA als Startpunkt mit den jeweiligen Endpunkten der Identitätsabbildung (bei 100%,100% und 0%,0%) verbindet. Bewegt der Fahrer nach dem Schaltvorgang nun sein Fahrpedal, so wird die virtuelle Fahrpedalstellung entlang der Strecken (Überführungsfunktion UF1, UF2) entsprechen skaliert, d.h. verändert. Mit anderen Wort, wenn der Fahrer das Fahrpedal weiter durchdrückt (FR größer als 75%), so wird die virtuelle Fahrpedalstellung FV entlang der Strecke UF1 skaliert. Nimmt der Fahrer den Fuß vom Fahrpedal und erniedrigt den realen Wert (FR kleiner als 75%), so wird die virtuelle Fahrpedalstellung FV entlang der Kurve UF2 skaliert.

Stellt der Fahrer beispielhaft einen Fahrpedalwert von 50% für die reale Fahrpedalstellung FR, so wird der virtuelle Fahrpedalwert der virtuellen Fahrpedalstellung FV entsprechend auf etwa 23% erniedrigt. Wie bereits erwähnt, muss diese Skalierung nicht linear erfolgen, sondern kann progressiv oder mit einer entsprechend anderen oder sonstigen nicht-linearen Funktion umgerechnet werden.

Erreicht der Fahrer mit dem realen Fahrpedal einen der Endpunkte Z (100%,100%) und Y (0%,0%), so schneiden sich die Linien der Skalierung (Überführungsfunktion UF1, UF2) und die Diagonale (Identitätsabbildung). Praktisch kann in diesem Fall die Skalierung im Sinne eines Abbruchkriteriums wieder aufgehoben werden, und der Fahrer bewegt sich nun nicht mehr auf der Überführungsfunktion UF1, UF2, sondern nur noch entlang der Diagonalen (Identitätsabbildung) auf und ab - genau genommen heißt dies, dass der reale Fahrpedalwert wieder direkt als virtueller Fahrpedalwert in die Zugkraftfunktion weitergegeben wird - was, wie erwähnt, gleichbedeutend damit ist, dass die virtuelle Fahrpedalstellung nicht mehr verwendet wird.

Die Schnittpunkte der Überführungsfunktion UF1, UF2 bzw. der betreffenden Strecken im Diagramm mit der Diagonale (Identitätsabbildung) müssen dabei keinesfalls genau die Endpunkte sein, es können auch Werte innerhalb der Strecke Diagonale (Identitätsabbildung) gewählt werden, wie im Diagramm (c) der Figur 3 ersichtlich. Hier sind die Schnittpunkte (W) und (X) gezeigt, und die entsprechende Überführungsfunktion UF1', UF2' . Wenn der Fahrer das reale Fahrpedal von 75% wegbewegt, kann entlang der Strecken bzw. Überführungsfunktion UF1', UF2' die virtuelle Fahrpedalstellung skaliert werden (hier auch der Einfachheit nur linear dargestellt).

Sobald die Strecken Überführungsfunktion UF1', UF2' die Diagonale (Identitätsabbildung) schneiden, d.h. bei den Punkten W oder X, kann ebenfalls wieder dazu übergegangen werden, nur noch auf der Diagonalen zu verfahren und den realen Fahrpedalwert wieder direkt als virtuellen Fahrpedalwert in die Zugkraftfunktion weiterzugeben.

Weiterhin kann der Fall auftreten, dass der Fahrer, nachdem er das Fahrpedal nur um einen (kleinen) Wert weiter gedrückt hat, dieses anschließend wieder wegnimmt und dies weiter wiederholt. Er würde daher für den Skalierungsfall gemäß Diagramm (b) oder auch (c) nie oder nur sehr selten die Endpunkte Z,Y oder ggf. X,W erreichen, um damit wieder im unskalierten Fall zu landen.

Daher kann, sobald sich die Bewegungs- oder Betätigungsrichtung des Fahrpedals ändert, vom gerade erreichten Wert als einem neuen Äquivalenzwert neu auf die Endpunkte Z, Y (oder Zielpunkte W, X) skaliert werden. In dem Diagramm (d) der Figur 3 ist dies dargestellt. Hier ist zunächst der Äquivalenzwert FA aus Diagramm (b) gezeigt, sowie die Überführungsfunktion UF1 (hier nur für zunehmende Werte). Der Fahrer erhöht nun den realen Fahrpedalwert von 75% auf 80%. Beim Wert bzw. neuen Äquivalenzwert FA' (hier 80% der FR) soll sich die Bewegungs- oder Betätigungsrichtung des Fahrpedals ändern.

Anschließend wird die reale Fahrpedalstellung FR erniedrigt. Nun wird vom neuen Äquivalenzwert FA') eine neue Skalierungsfunktion bzw. Überführungsfunktion UF2" mit Endpunkt Y erstellt und der Fahrer bewegt sich beim Erniedrigen des Fahrpedals auf 40% entlang der Strecke Überführungsfunktion UF2". Beim Wert bzw. neuen Äquivalenzwert FA" (hier 40% der FR) soll sich die Bewegungs- oder Betätigungsrichtung des Fahrpedals erneut ändern. Eine erneute Erhöhung des Fahrpedalwertes führt danach entlang der Strecke bzw. Überführungsfunktion UF2" zum Endpunkt Z.

Das beschriebene Vorgehen ist für einen Hochschaltvorhang (von Gang G1 nach Gang G2), lässt sich jedoch analog für das Schalten in einen niedrigeren Gang (von Gang G2 nach Gang G1) anwenden. Die in den Abbildungen gezeigten Äquivalenzwert wären dabei nur unterhalb der Diagonalen ID.

Für die genannte parametrierbare Kurve oder Funktion, entlang derer das Verhältnis reale zu virtuelle Fahrpedalstellung skaliert wird (Überführungsfunktion), kann zusätzlich ein Abbruchkriterium eingeführt werden, bei dem die reale Fahrpedalstellung wieder eins zu eins als virtuelle Fahrpedalstellung den Zugkraftfunktion übergeben wird, bzw. bei denen die virtuelle Fahrpedalstellung nicht mehr verwendet wird ("Normbetrieb").

Hierfür kommen mehrere Möglichkeiten des Übergangs, d.h. verschiedene Abbruchkriterien, in Betracht. Dies kann z.B. das Erreichen des minimalen oder maximalen Werts der realen Fahrpedalstellung sein, also das Erreichen eines der Endpunkte Z, Y gemäß Diagramm (b) in Figur 3. Wie bereits erwähnt, ist es möglich zum Normbetrieb zu wechseln, wenn das Fahrpedal entweder gar nicht (Punkt Y) oder voll (Punkt Z) gedrückt wird. Dies führt jedoch mitunter zu langen "Verschleifzeiten", da es durchaus sein kann, dass Y bzw. Z nur nach einiger Zeit erreicht werden.

Hierzu können reale Fahrpedallimits verwendet werden, es wird zurückgewechselt, wenn die reale Bedienelementstellung einen Wert erreicht, der um höchstens einen vorgegebenen Wert vom minimalen oder maximalen Wert abweicht. Der Übergang in den Normbetrieb ist also ebenfalls über harte Limits des realen Fahrpedals möglich. Beispielsweise können die Bedingungen realer Fahrpedalwert < 5% oder > 95% gelten. Werden diese Grenzen erreicht (über- / unterschritten), so kann direkt wieder in den Normbetrieb gewechselt werden. Die Punkte W, X im Diagramm (c) entsprechen z.B. in etwa realen Fahrpedalwerten von 10% und 90%. Der Vorteil dieses Vorgehens besteht darin, dass die Limits früher erreicht werden als die eigentlichen Endpunkte, aber auch, dass für diese Limits angenommen werden kann, dass der Fahrer tatsächlich eine starke Verzögerung oder Beschleunigung wünscht (oder zumindest erwartet) und ein Verschleifen nicht mehr nötig ist.

Ebenso in Betracht kommt, wenn die gemäß aktuell verwendeter Überführungsfunktion bestimmte virtuelle Fahrpedalstellung einen Wert erreicht, der der realen Fahrpedalstellung entspricht, also wenn z.B. die Überführungsfunktion UF1',UF2' die Identitätsabbildung ID (Diagonale) schneidet. Dies ist im Diagramm (c) mit den Punkten X,W zu sehen. Sobald die Diagonale erreicht wird, kann ebenfalls wieder zum Normbetrieb übergegangen werden.

Ebenso in Betracht kommt, wenn die gemäß aktuell verwendeter Überführungsfunktion bestimmte virtuelle Fahrpedalstellung einen Wert erreicht, der um höchstens einen vorgegebenen Wert von der realen Fahrpedalstellung abweicht; es handelt sich hier um einen absoluten Abstand zur Identitätsabbildung ID (Diagonale). Dies kann z.B. gemäß Diagramm (d) bei der Überführungsfunktion UF2" auf halbem Wege von FA" nach Z der Fall sein.

Ebenso in Betracht kommt, wenn eine Steigung der aktuell verwendeten Überführungsfunktion einem Wert entspricht oder einen Wert erreicht, der um höchstens einen vorgegebenen Wert von einer Steigung der Identitätsabbildung ID abweicht. Die Diagonale besitzt eine Steigung (oder bzw. Skalierung, Übersetzung ) von eins. Wird nun beispielsweise die Methode mit linearen Geraden verwendet, wie z.B. im Diagramm (d) in Figur 3 gezeigt, so wird die Steigung der Geraden sich bei jedem Fahrpedalrichtungswechsel in Richtung Wert eins annähern (von unten oder von oben).

In dem gezeigten Bespiel in Diagramm (d) passt sich die Steigung von UF1, über UF2" nach UF1" immer näher an eins (oder allgemein die Steigung von ID) an. Ist nun die Steigung der Skalierungs- bzw. Überführungsfunktion nahe einem parametrierbaren Wert in der Nähe von eins, so wird ebenfalls auf den Normalbetrieb übergegangen. Beispielsweise kann als Bedingung z.B. Steigung kleiner als 1,02 oder größer als 0,98" herangezogen werden. Für den Fall in Diagramm (d) in Figur 3 könnte z.B. die Steigung für UF1" bereits als entsprechend nahe an der Steigung von ID angesehen werden.

Ebenfalls ist es möglich, eine Kombination der genannten Abbruchkriterien den zu verwenden, um die Vorteile der einzelnen Abbruchkriterien gleichzeitig zu nutzen.

## Patentansprüche

1. Verfahren zum Betreiben einer mobilen Arbeitsmaschine (100), wobei die mobile Arbeitsmaschine einen Fahrantrieb (110) mit einem Getriebe (116) mit wenigstens zwei verschiedenen, wählbaren Übersetzungsstufen (G1, G2), und ein Bedienelement (120) aufweist, wobei die mobile Arbeitsmaschine (100) eingerichtet ist, bei einer Betätigung des Bedienelements (120) den Fahrantrieb (110) mit einer aktuell gewählten Übersetzungsstufe zu betreiben,
wobei jeder der zwei verschiedenen, wählbaren Übersetzungsstufen (G1, G2) jeweils eine Zugkraftfunktion zugeordnet ist, die eine Bedienelementstellung des Bedienelements auf ein von dem Fahrantrieb zu stellendes Drehmoment und/oder eine Geschwindigkeit der mobilen Arbeitsmaschine abbildet,
umfassend, wenn ein Übersetzungsstufenwechsel von einer vorherigen Übersetzungsstufe mit einer vorherigen Zugkraftfunktion zur einer aktuellen Übersetzungsstufe mit einer aktuellen Zugkraftfunktion erfolgt:
Bereitstellen oder Bestimmen (200) einer vor dem Wechsel vorliegenden realen Bedienelementstellung (FR), sowie einer vor dem Wechsel vorliegenden Geschwindigkeit (v) der mobilen Arbeitsmaschine und/oder eines basierend auf der vorherigen Bedienelementstellung und der vorherigen Zugkraftfunktion vor dem Wechsel zu stellenden Drehmoments (M);
Bestimmen (210), basierend auf der aktuellen Zugkraftfunktion (ZF2), eines Äquivalenzwertes (FA) der Bedienelementstellung derart, dass das basierend auf dem Äquivalenzwert (FA) und der aktuellen Zugkraftfunktion (ZF2) sich ergebende, zu stellende Drehmoment zumindest innerhalb vorgegebener Grenzen dem vor dem Wechsel vorliegenden, zu stellenden Drehmoment entspricht, und/oder derart, dass die basierend auf dem Äquivalenzwert und der aktuellen Zugkraftfunktion sich ergebende, Geschwindigkeit zumindest innerhalb vorgegebener Grenzen der vor dem Wechsel vorliegenden, Geschwindigkeit entspricht.

2. Verfahren nach Anspruch 1, weiterhin umfassend, zumindest bis zum Erreichen eines oder eines von mehreren Abbruchkriterien: Bestimmen (220), basierend auf der realen Bedienelementstellung und unter Berücksichtigung des Äquivalenzwertes der Bedienelementstellung, einer virtuellen Bedienelementstellung; und Ansteuern (230) des Fahrantriebs gemäß der der aktuell gewählten Übersetzungsstufe zugeordneten Zugkraftfunktion und basierend auf der virtuellen Bedienelementstellung.

3. Verfahren nach Anspruch 2, wobei das Bestimmen der virtuellen Bedienelementstellung (FV), basierend auf der realen Bedienelementstellung (FR) und unter Berücksichtigung des Äquivalenzwertes (FA) der Bedienelementstellung umfasst:
Bestimmen oder Bereitstellen einer Überführungsfunktion (UF1, UF2), die die reale Bedienelementstellung auf die virtuelle Bedienelementstellung abbildet und den Äquivalenzwert der Bedienelementstellung umfasst; und
Bestimmen der virtuellen Bedienelementstellung basierend auf der realen Bedienelementstellung und der Überführungsfunktion

4. Verfahren nach Anspruch 3, weiterhin umfassend, jeweils bei einem Wechsel einer Betätigungsrichtung des Bedienelements:
Bestimmen eines jeweiligen neuen Äquivalenzwerts (FA', FA") der Bedienelementstellung, der der virtuellen Bedienelementstellung beim Wechsel der Betätigungsrichtung entspricht;
Bestimmen oder Bereitstellen einer jeweiligen neuen Überführungsfunktion (UF1", UF2"), die die reale Bedienelementstellung auf die virtuelle Bedienelementstellung abbildet und den jeweiligen neuen Äquivalenzwert der Bedienelementstellung umfasst; und
Bestimmen der virtuellen Bedienelementstellung basierend auf der realen Bedienelementstellung und der jeweiligen neuen Überführungsfunktion.

5. Verfahren nach Anspruch 3 oder 4, wobei die Überführungsfunktionen jeweils derart bestimmt werden, dass sich deren Werte der virtuellen Bedienelementstellungen, ausgehend vom jeweiligen Äquivalenzwert, mit zunehmendem und/oder abnehmendem Wert der realen Bedienelementstellung an entsprechende Werte einer Identitätsabbildung annähern, wobei die Identitätsabbildung die reale Bedienelementstellung direkt auf die virtuelle Bedienelementstellung abbildet.

6. Verfahren nach einem der Ansprüche 3 bis 5, wobei die Überführungsfunktionen jeweils derart bestimmt werden, dass deren Wertebereich der realen Bedienelementstellungen, ausgehend vom jeweiligen Äquivalenzwert, einen maximalen Wert für zunehmend und/odereinen minimalen Wert für abnehmendee Wert der realen Bedienelementstellung umfassen.

7. Verfahren nach einem der Ansprüche 2 bis 6, wobei unmittelbar nach dem Übersetzungsstufenwechsel der Äquivalenzwert der Bedienelementstellung als virtuelle Bedienelementstellung verwendet wird.

8. Verfahren nach einem der Ansprüche 2 bis 7, weiterhin umfassend, nach Erreichen des einen oder des einen von den mehreren Abbruchkriterien: Ansteuern des Fahrantriebs gemäß der der aktuell gewählten Übersetzungsstufe zugeordneten Zugkraftkennlinie und basierend auf der realen Bedienelementstellung.

9. Verfahren nach einem der Ansprüche 2 bis 8, wobei das eine oder die mehreren Abbruchkriterien zumindest eines der folgenden Kriterien umfassen:
- Die reale Bedienelementstellung erreicht einen minimalen oder maximalen Wert,
- Die reale Bedienelementstellung erreicht einen Wert, der um höchstens einen vorgegebenen Wert vom minimalen oder maximalen Wert abweicht,
- In Rückbezug auf Anspruch 2 oder 3: Die gemäß aktuell verwendeter Überführungsfunktion bestimmte virtuelle Bedienelementstellung erreicht einen Wert, der der realen Bedienelementstellung entspricht,
- In Rückbezug auf Anspruch 2 oder 3: Die gemäß aktuell verwendeter Überführungsfunktion bestimmte virtuelle Bedienelementstellung erreicht einen Wert, der der um höchstens einen vorgegebenen Wert von der realen Bedienelementstellung abweicht,
- In Rückbezug auf Anspruch 4: Eine Steigung der aktuell verwendeten Überführungsfunktion entspricht einem Wert oder erreicht einen Wert, der um höchstens einen vorgegebenen Wert von einer Steigung der Identitätsabbildung abweicht.

10. Recheneinheit umfassend einen Prozessor, der so konfiguriert ist, dass er die von der Recheneinheit ausgeführten Schritte eines Verfahren nach einem der vorstehenden Ansprüche ausführt.

11. Mobile Arbeitsmaschine, die einen Fahrantrieb mit einem Getriebe mit wenigstens zwei verschiedenen, wählbaren Übersetzungsstufen, und ein Bedienelement aufweist, wobei die mobile Arbeitsmaschine eingerichtet ist, bei einer Betätigung des Bedienelements den Fahrantrieb mit einer aktuell gewählten Übersetzungsstufe zu betreiben, wobei die mobile Arbeitsmaschine weiterhin eine Recheneinheit nach Anspruch 10 aufweist.

12. Computerprogramm umfassend Befehle, die bei der Ausführung des Programms durch einen Computer diesen veranlassen, das Verfahren nach einem der Ansprüche 1 bis 9 auszuführen.

13. Computerlesbarer Datenträger, auf dem das Computerprogramm nach Anspruch 12 gespeichert ist.

## Claims

1. Method for operating a mobile working machine (100), wherein the mobile working machine has a traction drive (110) with a transmission (116) having at least two different, selectable transmission ratios (G1, G2), and an operating element (120), wherein the mobile working machine (100) is configured to operate the traction drive (110) at a currently selected transmission ratio when the operating element (120) is actuated,
wherein each of the two different, selectable transmission ratios (G1, G2) is assigned in each case a traction force function which maps an operating element position of the operating element to a torque to be set by the traction drive and/or a speed of the mobile working machine,
comprising, if a transmission ratio change from a previous transmission ratio with a previous traction force function to a current transmission ratio with a current traction force function takes place:
providing or determining (200) a real operating element position (FR) present before the change, and a speed (v) of the mobile working machine present before the change, and/or a torque (M) to be set on the basis of the previous operating element position and the previous traction force function before the change;
determining (210), on the basis of the current traction force function (ZF2), an equivalent value (FA) of the operating element position in such a way that the torque to be set that arises on the basis of the equivalent value (FA) and the current traction force function (ZF2) corresponds, at least within predefined limits, to the torque to be set that was present before the change, and/or in such a way that the speed resulting on the basis of the equivalent value and the current traction force function corresponds, at least within predefined limits, to the speed present before the change.

2. Method according to Claim 1, further comprising, at least until one or one of a plurality of termination criteria is reached: determining (220) a virtual operating element position on the basis of the real operating element position and taking into account the equivalent value of the operating element position; and controlling (230) the traction drive according to the traction force function assigned to the currently selected transmission ratio and on the basis of the virtual operating element position.

3. Method according to Claim 2, wherein the determination of the virtual operating element position (FV) on the basis of the real operating element position (FR) and taking into account the equivalent value (FA) of the operating element position comprises:
determining or providing a transfer function (UF1, UF2) which maps the real operating element position to the virtual operating element position and comprises the equivalent value of the operating element position; and
determining the virtual operating element position on the basis of the real operating element position and the transfer function.

4. Method according to Claim 3, furthermore comprising, in each case in the event of a change in an actuation direction of the operating element:
determining a respective new equivalent value (FA', FA") of the operating element position which corresponds to the virtual operating element position when the actuation direction changes;
determining or providing a respective new transfer function (UF1", UF2") that maps the real operating element position to the virtual operating element position and comprises the respective new equivalent value of the operating element position; and
determining the virtual operating element position on the basis of the real operating element position and the respective new transfer function.

5. Method according to Claim 3 or 4, wherein the transfer functions are each determined such that their values of the virtual operating element positions, proceeding from the respective equivalent value, approach corresponding values of an identity map with an increasing and/or decreasing value of the real operating element position, wherein the identity map maps the real operating element position directly to the virtual operating element position.

6. Method according to one of Claims 3 to 5, wherein the transfer functions are each determined in such a way that their value ranges of the real operating element positions, proceeding from the respective equivalent value, comprise a maximum value for an increasing value and/or a minimum value for a decreasing value of the real operating element position.

7. Method according to one of Claims 2 to 6, wherein the equivalent value of the operating element position is used as the virtual operating element position immediately after the transmission ratio change.

8. Method according to one of Claims 2 to 7, further comprising, after reaching the one or the one of the plurality of termination criteria: controlling the traction drive in accordance with the traction force characteristic curve assigned to the currently selected transmission ratio and on the basis of the real operating element position.

9. Method according to one of Claims 2 to 8, wherein the one or more termination criteria comprise at least one of the following criteria:
- the real operating element position reaches a minimum or maximum value,
- the real operating element position reaches a value which deviates from the minimum or maximum value by at most a predefined value,
- referring back to Claim 2 or 3: the virtual operating element position determined according to the currently used transfer function reaches a value which corresponds to the real operating element position,
- referring back to Claim 2 or 3: the virtual operating element position determined according to the currently used transfer function reaches a value which deviates from the real operating element position by at most a predefined value,
- referring back to Claim 4: a slope of the currently used transfer function corresponds to a value or reaches a value that deviates from a slope of the identity map by at most a predefined value.

10. Computing unit comprising a processor which is configured to carry out the steps of a method according to one of the preceding claims that are carried out by the computing unit.

11. Mobile working machine which has a traction drive with a transmission having at least two different, selectable transmission ratios, and an operating element, wherein the mobile working machine is configured to operate the traction drive at a currently selected transmission ratio when the operating element is actuated, wherein the mobile working machine furthermore has a computing unit according to Claim 10.

12. Computer program comprising instructions which, when the program is executed by a computer, cause the computer to carry out the method according to one of Claims 1 to 9.

13. Computer-readable data carrier on which the computer program according to Claim 12 is stored.

## Revendications

1. Procédé de fonctionnement d'une machine de travail mobile (100), dans lequel la machine de travail mobile comprend un entraînement de traction (110) doté d'une transmission (116) présentant au moins deux rapports de transmission différents sélectionnables (G1, G2), et un élément de commande (120), la machine de travail mobile (100) étant conçue pour faire fonctionner l'entraînement de traction (110) avec un rapport de transmission actuellement sélectionné lors d'un actionnement de l'élément de commande (120),
une fonction de force de traction étant respectivement associée à chacun des deux rapports de transmission (G1, G2) différents sélectionnables, laquelle fonction fait correspondre une position d'élément de commande de l'élément de commande à un couple à régler par l'entraînement de traction et/ou à une vitesse de la machine de travail mobile,
comprenant, lorsqu'un changement de rapport de transmission est effectué depuis un rapport de transmission précédent doté d'une fonction de force de traction précédente vers un rapport de transmission actuel doté d'une fonction de force de traction actuelle :
la fourniture ou la détermination (200) d'une position réelle (FR) de l'élément de commande présente avant le changement, ainsi que d'une vitesse (v) de la machine de travail mobile présente avant le changement, et/ou d'un couple (M) à régler avant le changement sur la base de la position précédente de l'élément de commande et de la fonction de force de traction précédente ;
la détermination (210), sur la base de la fonction de force de traction actuelle (ZF2), d'une valeur d'équivalence (FA) de la position de l'élément de commande, de telle sorte que le couple à régler, résultant de la valeur d'équivalence (FA) et de la fonction de force de traction actuelle (ZF2), corresponde, au moins dans des limites prédéfinies, au couple à régler présent avant le changement, et/ou de telle sorte que la vitesse résultant de la valeur d'équivalence et de la fonction de force de traction actuelle corresponde, au moins dans des limites prédéfinies, à la vitesse présente avant le changement.

2. Procédé selon la revendication 1, comprenant en outre, au moins jusqu'à ce qu'un ou l'un de multiples critères d'arrêt soit atteint : la détermination (220), sur la base de la position réelle de l'élément de commande et en tenant compte de la valeur d'équivalence de la position de l'élément de commande, d'une position virtuelle de l'élément de commande ; et le pilotage (230) de l'entraînement de traction selon la fonction de force de traction associée au rapport de transmission actuellement sélectionné et sur la base de la position virtuelle de l'élément de commande.

3. Procédé selon la revendication 2, dans lequel la détermination de la position virtuelle (FV) de l'élément de commande sur la base de la position réelle (FR) de l'élément de commande et en tenant compte de la valeur d'équivalence (FA) de la position de l'élément de commande comprend :
la détermination ou la fourniture d'une fonction de transfert (UF1, UF2) qui met en correspondance la position réelle de l'élément de commande avec la position virtuelle de l'élément de commande et qui comprend la valeur d'équivalence de la position de l'élément de commande ; et
la détermination de la position virtuelle de l'élément de commande sur la base de la position réelle de l'élément de commande et de la fonction de transfert.

4. Procédé selon la revendication 3, comprenant en outre respectivement, lors d'un changement de direction d'actionnement de l'élément de commande :
la détermination d'une nouvelle valeur d'équivalence respective (FA', FA") de la position de l'élément de commande, qui correspond à la position virtuelle de l'élément de commande lors du changement de direction d'actionnement ;
la détermination ou la fourniture d'une nouvelle fonction de transfert respective (UF1", UF2") qui met en correspondance la position réelle de l'élément de commande avec la position virtuelle de l'élément de commande et comprend la nouvelle valeur d'équivalence respective de la position de l'élément de commande ; et
la détermination de la position virtuelle de l'élément de commande sur la base de la position réelle de l'élément de commande et de la nouvelle fonction de transfert respective.

5. Procédé selon la revendication 3 ou 4, dans lequel les fonctions de transfert sont respectivement déterminées de telle sorte que leurs valeurs des positions virtuelles de l'élément de commande, en partant de la valeur d'équivalence respective, tendent vers des valeurs correspondantes d'une mise en correspondance d'identité, à mesure que la valeur de la position réelle de l'élément de commande croît et/ou décroît, la mise en correspondance d'identité mettant directement en correspondance la position réelle de l'élément de commande avec la position virtuelle de l'élément de commande.

6. Procédé selon l'une quelconque des revendications 3 à 5, dans lequel les fonctions de transfert sont respectivement déterminées de telle sorte que leur plage de valeurs des positions réelles de l'élément de commande, en partant de la valeur d'équivalence respective, comprenne une valeur maximale pour une valeur croissante et/ou une valeur minimale pour une valeur décroissante de la position réelle de l'élément de commande.

7. Procédé selon l'une quelconque des revendications 2 à 6, dans lequel, immédiatement après le changement de rapport de transmission, la valeur d'équivalence de la position de l'élément de commande est utilisée comme position virtuelle de l'élément de commande.

8. Procédé selon l'une quelconque des revendications 2 à 7, comprenant en outre, après avoir atteint ledit ou l'un des multiples critères d'arrêt : l'actionnement de l'entraînement de traction selon la courbe caractéristique de force de traction associée au rapport de transmission sélectionné et sur la base de la position réelle de l'élément de commande.

9. Procédé selon l'une quelconque des revendications 2 à 8, dans lequel ledit ou les multiples critères d'arrêt comprennent au moins l'un des critères suivants :
- la position réelle de l'élément de commande atteint une valeur minimale ou maximale,
- la position réelle de l'élément de commande atteint une valeur qui s'écarte de la valeur minimale ou maximale d'au plus une valeur prédéfinie,
- en référence à la revendication 2 ou 3 : la position virtuelle de l'élément de commande, déterminée selon la fonction de transfert actuellement utilisée, atteint une valeur qui correspond à la position réelle de l'élément de commande,
- en référence à la revendication 2 ou 3 : la position virtuelle de l'élément de commande, déterminée selon la fonction de transfert actuellement utilisée, atteint une valeur qui s'écarte de la position réelle de l'élément de commande d'au plus une valeur prédéfinie,
- en référence à la revendication 4 : une pente de la fonction de transfert actuellement utilisée correspond à une valeur ou atteint une valeur qui s'écarte d'une pente de la mise en correspondance d'identité d'au plus une valeur prédéterminée.

10. Unité de calcul comprenant un processeur qui est configuré pour exécuter les étapes d'un procédé selon l'une quelconque des revendications précédentes, mis en œuvre par l'unité de calcul.

11. Machine de travail mobile, qui comprend un entraînement de traction doté d'une transmission présentant au moins deux rapports de transmission différents sélectionnables, et un élément de commande, la machine de travail mobile étant conçue pour faire fonctionner l'entraînement de traction avec un rapport de transmission actuellement sélectionné lors d'un actionnement de l'élément de commande, la machine de travail mobile comprenant en outre une unité de calcul selon la revendication 10.

12. Programme informatique comprenant des instructions qui, lors de l'exécution du programme par un ordinateur, amènent ce dernier à exécuter le procédé selon l'une quelconque des revendications 1 à 9.

13. Support de données lisible par ordinateur, sur lequel est stocké le programme informatique selon la revendication 12.
